# EUROPEAN PATENT SPECIFICATION

(11) **EP 4 434 247 B1**
(45) Date of publication and mention of the grant of the patent: **10.06.2026**
(21) Application number: 22911936.7
(22) Date of filing: 21.12.2022
(51) Int. Cl.: H04W 12/106, H04W 76/40, H04W 12/033, H04W 4/06, H04W 76/10, H04W 12/37

(54) **METHOD AND SYSTEM FOR SUPPORTING PROTECTION OF MBS TRAFFIC IN WIRELESS COMMUNICATION SYSTEM**
VERFAHREN UND SYSTEM ZUR UNTERSTÜTZUNG DES SCHUTZES VON MBS-VERKEHR IN EINEM DRAHTLOSKOMMUNIKATIONSSYSTEM
PROCÉDÉ ET SYSTÈME DE PRISE EN CHARGE DE LA PROTECTION DU TRAFIC MBS DANS UN SYSTÈME DE COMMUNICATION SANS FIL

(30) Priority: 21.12.2021 IN 202141059845; 09.12.2022 IN 202141059845
(43) Date of publication of application: 25.09.2024
(73) Proprietor: Samsung Electronics Co., Ltd., Suwon-si, Gyeonggi-do 16677 (KR)
(72) Inventor: RAJADURAI, Rajavelsamy, Bangalore, Karnataka 560037 (IN); RAJENDRAN, Rohini, Bangalore, Karnataka 560037 (IN); SHRIVASTAVA, Vinay Kumar, Bangalore, Karnataka 560037 (IN); GUPTA, Varini, Bangalore, Karnataka 560037 (IN); SASI, Nivedya Parambath, Bangalore, Karnataka 560037 (IN)
(74) Representative: Nederlandsch Octrooibureau
(86) International application number: PCT/KR2022/020978
(87) International publication number: WO 2023/121303

(56) References cited:
- US-A1- 2018 083 972
- US-A1- 2021 168 568
- "3rd Generation Partnership Project; Technical Specification Group Services and System Aspects; Study on security aspects of enhancements for 5G Multicast- Broadcast Services (MBS) (Release 17)", 1 November 2021 (2021-11-01), XP052073427, Retrieved from the Internet <URL:https://ftp.3gpp.org/tsg_sa/WG3_Security/TSGS3_105e/Docs/S3-214013.zip S3-214013-editorial changes to TR 33.850.docx> [retrieved on 20211101]
- QUALCOMM INCORPORATED, TELUS, ERICSSON, BBC, ENENSYS, DOLBY, ORANGE: "[5MBUSA] Agreements from offline", 3GPP DRAFT; S4-211270, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. e meeting; 20210818 - 20210827, 27 August 2021 (2021-08-27), Mobile Competence Centre ; 650, route des Lucioles ; F-06921 Sophia-Antipolis Cedex ; France, XP052064501
- HUAWEI, HISILICON: "Procedure for MBS session creation and service announcement", 3GPP DRAFT; S6-212643, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. e-meeting; 20211115 - 20211123, 10 November 2021 (2021-11-10), Mobile Competence Centre ; 650, route des Lucioles ; F-06921 Sophia-Antipolis Cedex ; France, XP052182400
- XIAOMI: "MBS: Update to Evaluation of Solution #2", 3GPP DRAFT; S3-213582, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20210927 - 20210930, 20 September 2021 (2021-09-20), Mobile Competence Centre ; 650, route des Lucioles ; F-06921 Sophia-Antipolis Cedex ; France, XP052063035
- SAMSUNG: "[Solution] Key generation and distribution mechanism for MBS", 3GPP DRAFT; S3-211144, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20210301 - 20210305, 22 February 2021 (2021-02-22), Mobile Competence Centre ; 650, route des Lucioles ; F-06921 Sophia-Antipolis Cedex ; France , XP051980532

## Description

### [Technical Field]

The present disclosure relates to MBS traffic protection in a wireless network, and more particularly to a method and a system for supporting protection of Multi-cast Broadcast Service (MBS) traffic in the wireless network.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

The 3rd Generation Partnership Project (3GPP) draft *"*Technical Specification Group Services and System Aspects; Study on security aspects of enhancements for 5G Multicast-Broadcast Services (MBS) (Release 17)", S3-214013, 1 November 2021, XP052073427, is a technical report about the security of 5G multicast-broadcast services.

US 2018/083972 A1, 28 March 2018, is about a method for a security configuration in a wireless communication system and an apparatus using the same. Specifically, in a method for performing a security configuration by a UE (User Equipment), the method may comprise steps of transmitting a security capability of the UE to a network, receiving security information determined by the network from the network, and determining an action of the UE, based on a configuration of a security control configured in the UE and the security information received from the network, and the configuration of the security control may includes a security capability item, a control condition of the security capability item, and the action of the UE in accordance with the control condition.

### [Disclosure in Invention]

### [Solution to Problem]

The solution is set out in the appended set of claims.

### [Advantageous Effects of Invention]

According to various embodiments of the disclosure, procedures regarding handling and protection of MBS traffic can be efficiently enhanced.

### [Brief Description of Drawings]

This invention is illustrated in the accompanying drawings, throughout which like reference letters indicate corresponding parts in the various figures. The embodiments herein will be better understood from the following description with reference to the drawings, in which:
FIG. 1 is a block diagram of a system for supporting protection of Multi-cast Broadcast Service (MBS) traffic in a wireless network, according to the embodiments as disclosed herein;
FIG. 2 is a block diagram of a user equipment (UE) for supporting protection of the MBS traffic in the wireless network, according to the embodiments as disclosed herein;
FIG. 3 is a block diagram of a session management function (SMF) device for supporting protection of the MBS traffic in the wireless network, according to the embodiments as disclosed herein;
FIG. 4 is a flow chart illustrating a method for determining MBS traffic delivery method in the wireless network by the UE, according to the embodiments as disclosed herein;
FIG. 5 is a flow chart illustrating a method for supporting protection of the MBS traffic in the wireless network by the SMF device, according to the embodiments as disclosed herein;
FIG. 6 is a schematic view illustrating a delivery method, according to the prior arts;
FIG. 7 is a block diagram illustrating a process of key distribution and generation, according to the prior arts;
FIG. 8 is a flow diagram illustrating a method for supporting protection over a packet data convergence protocol (PDCP) layer for a fifth generation core (5GC) individual traffic delivery method when service layer protection is not supported, according to the embodiments as disclosed herein;
FIG. 9 is a block diagram illustrating user plane MBS data transmission from a content delivery network (CDN) to the UEs, according to the embodiments as disclosed herein;
FIG. 10 is a flow diagram illustrating a method for joining a session for supporting protection of the MBS traffic in the wireless network by the UE, according to the embodiments as disclosed herein;
FIG. 11 is a flow diagram illustrating a method for supporting protection of the MBS traffic in the wireless network by the SMF device, according to the embodiments as disclosed herein; and
FIG. 12 is a flow diagram illustrating a method for determining protected and unprotected MB traffic based on a type of the MB traffic, according to the embodiments as disclosed herein.
FIG. 13 is a block diagram illustrating a structure of a UE according to an embodiment of the disclosure.
FIG. 14 is a block diagram illustrating a structure of a base station according to an embodiment of the disclosure.
Fig. 15 is a block diagram illustrating a structure of a network entity according to an embodiment of the disclosure.

### [Best Mode for Carrying out the Invention]

Accordingly the embodiments herein disclose a method for supporting protection of Multi-cast Broadcast Service (MBS) traffic in a wireless network. The method includes receiving security information in a MBS announcement. The security information includes at least one of a traffic protected at a service layer in the security information, the traffic unprotected at the service layer in the security information, indications for which security procedures are supported by the network: a control-plane procedure or a user-plane procedure, and the traffic allowed via 5G Core (5GC) individual MBS traffic delivery method, the traffic not allowed via 5GC individual MBS traffic delivery method, different levels of protection supported for point-to-multipoint delivery and point-to-point delivery, and the different levels of protection not supported for point-to-multipoint delivery and point-to-point delivery. The method also includes determining, by the UE, if MBS traffic protection is enabled or not over the service layer, based on the security information received in the MBS announcement. Further, the method includes determining whether security capability of the MBS supports handling of the MBS traffic protected at the service layer, when the MBS traffic protection is not applied over the service layer, and determining if 5GC individual traffic delivery method is supported by the UE to deliver the MBS traffic protected at the service layer when the security capability of the MBS supports handling of the MBS traffic protected at the service layer. The method also includes joining a MBS session by sending a Non-access stratum (NAS) message to a session management function (SMF) entity, if the 5GC individual traffic delivery method is supported to deliver the traffic protected at the service layer. The NAS message indicates the SMF device to select the 5GC individual traffic delivery method for delivering the MBS traffic protected at the service layer through the wireless network when the UE supports the individual traffic delivery method.

In an embodiment, determining if the MBS traffic protection is applied or not over the service layer includes identifying theMBS traffic is protected or unprotected at the service layer based on the security information received in the MBS announcement, and determining if the MBS traffic protection is applied or not over the service layer based on the identification of theMBStraffic at the service layer.

In an embodiment, the NAS message is indicated in at least one of a PDU session establishment request, a PDU session modification request, a NAS and/or access stratum (AS) security mode complete message or a registration request message.

In an embodiment, the MBS session indicates MBS session identification (ID) of the UE for delivering the MBS traffic via the 5GC individual traffic delivery method.

In an embodiment, based on the indication received from the AF, the security information is transmitted in the MBS announcement by a network.

Accordingly the embodiments herein disclose an UE for supporting protection of Multi-cast Broadcast Service (MBS) traffic in a wireless network. The UE includes a memory, a processor coupled to the memory, a communicator coupled to the memory and the processor, and a MBS traffic management controller coupled to the memory, the processor and the communicator. The MBS traffic management controller is configured to receive security information in a MBS announcement. The security information includes at least one of a traffic protected at a service layer in the security information, the traffic unprotected at the service layer in the security information, indications for which security procedures are supported by the network: a control-plane procedure or a user-plane procedure, the traffic allowed via 5G Core (5GC) individual MBS traffic delivery method, the traffic not allowed via 5GC individual MBS traffic delivery method, different levels of protection supported for point-to-multipoint delivery and point-to-point delivery, and the different levels of protection not supported for point-to-multipoint delivery and point-to-point delivery. The MBS traffic management controller is configured to determine if MBS traffic protection is enabled or not over the service layer, based on the security information received in the MBS announcement, determine whether security capability of the MBS supports handling of the MBS traffic protected at the service layer, when the MBStraffic protection is not enabled over the service layer, determine if 5GC individual traffic delivery method is supported to deliver the MBS traffic protected at the service layer when the security capability of the MBS supports handling of the MBS traffic protected at the service layer, and join a MBS session by sending a Non-access stratum (NAS) message to a session management function (SMF) entity, if the 5GC individual traffic delivery method is supported to deliver the traffic protected at the service layer. The NAS message indicates the SMF entity to select the 5GC individual traffic delivery method for delivering the MBS traffic protected at the service layer through the wireless network when the UE supports the individual traffic delivery method.

In an embodiment, the UE determines if the MBS traffic protection is enabled or not over the service layer based on the security information received in the MBS announcement.

In an embodiment, the NAS request message is at least one of a protocol data unit (PDU) session establishment request, a PDU session modification request, security mode complete message or a registration request message.

In an embodiment, the UE determines whether the MBS data traffic is protected or not protected at the service layer using a MBS session configuration procedure to configure the MBS session towards a 5G core network (CN) by providing an application function (AF) indication to the 5G CN.

In an embodiment, based on the indication received from the AF, the security information is transmitted in the MBS announcement by a network.

Accordingly the embodiments herein disclose a method for supporting protection of Multi-cast Broadcast Service (MBS) traffic performed by a session management function (SMF) entity in a wireless network. The method includes receiving, from a user equipment (UE), a non-access stratum (NAS) request message including an indication for a request for 5G core (5GC) individual traffic delivery method, if a security capability of the UE does not support handling of the MBS traffic protected at a service layer. The method also includes determining user plane (UP) security enforcement information for a protocol data unit (PDU) session based on the security capability of the UE.

In an embodiment, the NAS request message further includes an identifier of an MBS session.

Accordingly the embodiments herein disclose a session management function (SMF) entity for supporting protection of Multi-cast Broadcast Service (MBS) traffic in a wireless network. The SMF entity includes a memory, a processor coupled to the memory, a communicator coupled to the memory and the processor, and a MBS traffic management controller coupled to the memory, the processor and the communicator. The MBS traffic management controller is configured to receive, from a user equipment (UE), a non-access stratum (NAS) request message including an indication for a request for 5G core (5GC) individual traffic delivery method, if a security capability of the UE does not support handling of the MBS traffic protected at a service layer. The MBS traffic management controller is configured to determine user plane (UP) security enforcement information for a protocol data unit (PDU) session based on the security capability of the UE.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the invention thereof, and the embodiments herein include all such modifications.

### [Mode for the Invention]

The principal object of the embodiments herein is to provide a method and a system for supporting protection of Multi-cast Broadcast Service (MBS) traffic in a wireless network. The method includes determining whether security capability of the MBS supports handling of traffic protected at a service layer in security information, based on the security information received over a MBS announcement. The security information includes the traffic protected at the service layer, the traffic unprotected at the service layer, indications for which security procedures are supported by the network: a control-plane procedure or a user-plane procedure, the traffic allowed via a fifth generation core (5GC) individual MBS traffic delivery method or the traffic not allowed via 5GC individual MBS traffic delivery method, different levels of protection supported for point-to-multipoint delivery and point-to-point delivery, and the different levels of protection not supported for point-to-multipoint delivery and point-to-point delivery.

Another object of the embodiments herein is to join a Protocol Data Unit (PDU) session if the security capability of the MBS does not support handling of the traffic protected at the service layer in the security information, and to send a Non-Access Stratum (NAS) message indicating to deliver the MBS traffic via 5GC individual MBS traffic delivery method to a session management function (SMF) device for delivering the MBS traffic via the 5GC individual MBS traffic delivery method, on joining the PDU session.

Another object of the embodiments herein is to transmit user plane security enforcement information including user plane security policy for the PDU session from user equipment (UE) to a Radio Access Network (RAN) based on the security capability of the MBS.

Therefore, the proposed method ensures protection of the MBS traffic at a Packet Data Convergence Protocol (PDCP) layer between the RAN and the UE in an efficient manner, if traffic protection over the service layer is not enabled. Further, the proposed disclosure selects the method of delivery in which both the UE and the RAN can choose either the 5GC individual MBS traffic delivery methodor a 5GC shared MBS traffic delivery method based on a configuration parameter from a core network and/or pre-configuration of the UE and the RAN.

Before undertaking the description below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits and the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. Although the terms first, second, etc. may be used herein to describe various elements, these elements should not be limited by these terms. These terms are generally only used to distinguish one element from another.

Accordingly the embodiments herein disclose a method for supporting protection of Multi-cast Broadcast Service (MBS) traffic in a wireless network. The method includes receiving security information in a MBS announcement. The security information includes at least one of a traffic protected at a service layer in the security information, the traffic unprotected at the service layer in the security information, indications for which security procedures are supported by the network: a control-plane procedure or a user-plane procedure, the traffic allowed via 5G Core (5GC) individual MBS traffic delivery method, the traffic not allowed via 5GC individual MBS traffic delivery method, different levels of protection supported for point-to-multipoint delivery and point-to-point delivery, and the different levels of protection not supported for point-to-multipoint delivery and point-to-point delivery. The method also includes determining, by the UE, if MBStraffic protection is enabled or not over the service layer, based on the security information received in the MBS announcement. Further, the method includes determining whether security capability of the MBS supports handling of the MBS traffic protected at the service layer, when the MBStraffic protection is not enabled over the service layer, and determining if5GC individual traffic delivery method is supported by the UE to deliver the MBS traffic protected at the service layer when the security capability of the MBS supports handling of the MBS traffic protected at the service layer. The method also includes joining a MBS session by sending a Non-access stratum (NAS) message to a session management function (SMF) device, if the 5GC individual traffic delivery method is supported to deliver the traffic protected at the service layer. The NAS message indicates the SMF device to select the 5GC individual traffic delivery method for delivering the MBS traffic protected at the service layer through the wireless network when the UE supports the individual traffic delivery method.

Accordingly the embodiments herein disclose a user equipment (UE) for supporting protection of Multi-cast Broadcast Service (MBS) traffic in a wireless network. The UE includes a memory, a processor coupled to the memory, a communicator coupled to the memory and the processor, and a MBS traffic management controller coupled to the memory, the processor and the communicator. The MBS traffic management controller is configured to receive security information in a MBS announcement. The security information includes at least one of a traffic protected at a service layer in the security information, the traffic unprotected at the service layer in the security information, indications for which security procedures are supported by the network: a control-plane procedure or a user-plane procedure, the traffic allowed via 5G Core (5GC) individual MBS traffic delivery method, the traffic not allowed via 5GC individual MBS traffic delivery method, different levels of protection supported for point-to-multipoint delivery and point-to-point delivery, and the different levels of protection not supported for point-to-multipoint delivery and point-to-point delivery. The MBS traffic management controller is configured todetermine if MBStraffic protection is enabled or not over the service layer, based on the security information received in the MBS announcement, determine whether security capability of the MBS supports handling of the MBS traffic protected at the service layer, when the MBStraffic protection is not enabled over the service layer, determine if5GC individual traffic delivery method is supported to deliver the MBS traffic protected at the service layer when the security capability of the MBS supports handling of the MBS traffic protected at the service layer, and join a MBS session by sending a Non-access stratum (NAS) message to a session management function (SMF) device, if the 5GC individual traffic delivery method is supported to deliver the traffic protected at the service layer. The NAS message indicates the SMF device to select the 5GC individual traffic delivery method for delivering the MBS traffic protected at the service layer through the wireless network when the UE supports the individual traffic delivery method.

Conventional methods and systems provide two delivery methods, namely the 5GC individual MBS traffic delivery method and the 5GC shared MBS traffic delivery delivering MBS traffic from a single data source to multiple UEs in a 5G core network (CN).Further, the 5GC shared MBS traffic delivery method includes a point-to-point (PTP) delivery method and/or a point-to-multipoint (PTM) delivery method to deliver the MBS traffic to the UEs in view of a radio access network (RAN).In PTP delivery, the RAN node delivers separate copies of a MBS data packet over radio to individual UE, and in PTM delivery, the RAN node delivers a single copy of MBS data packets over radio to a set of UEs. However, PTP or PTM delivery with the 5GC shared delivery method, and the 5GC individual delivery method may be used at the same time for a multicast MBS session. However, the conventional methods and systems do not determine the MBS traffic distribution method for the UE, based on the MBS security capability.

Unlike to the conventional methods and systems, if a next generation radio access network (NG-RAN) support 5G MBS, the proposed method determines the MBS traffic distribution method for the UE, based on the MBS security capability. Thereby, not degrading the security of the MBS distribution. Further, for security protection of the MBS traffic, control-plane procedure and user-plane procedure are optionally supported in a service layer. Therefore, multicast security policy between the UE and the RAN is not needed to avoid redundant protection. Moreover, the proposed method supports an end to end security mechanism for MBS traffic in 5G.

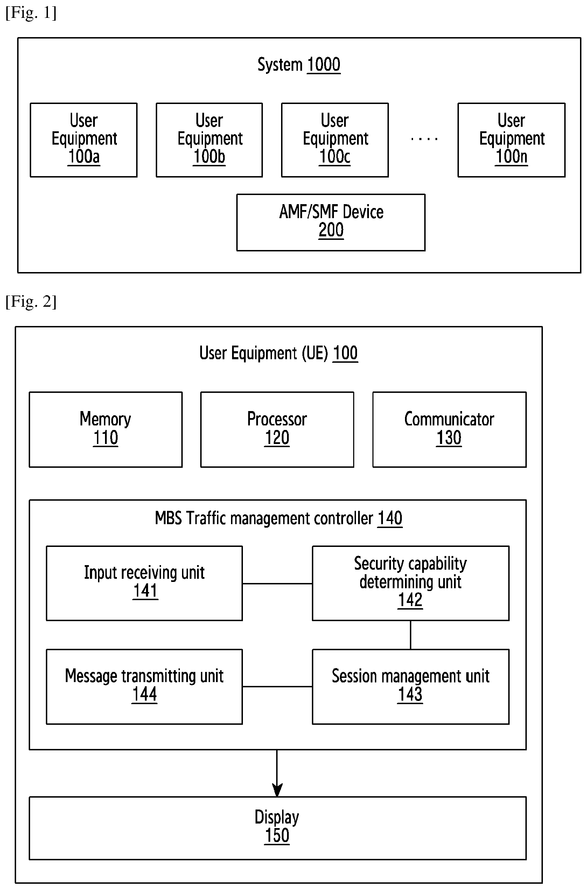

Referring now to the drawings and more particularly to FIGS. 1 through 12, where similar reference characters denote corresponding features consistently throughout the figure, these are shown preferred embodiments.

FIG. 1 is a block diagram of a system (1000) for supporting protection of multi-cast broadcast service (MBS) traffic in a wireless network, according to the embodiments as disclosed herein.

Referring to the FIG. 1, the system (1000) includes multiple UEs (100a-100n) and a session management function (SMF)/access and mobility management function (AMF) device (200).

The UEs (100a-100n) may be but not limited to a laptop, a palmtop, a desktop, a mobile phone, a smart phone, Personal Digital Assistant (PDA), a tablet, a wearable device, an Internet of Things (IoT) device, a virtual reality device, a foldable device, a flexible device, a display device and an immersive system. The UEs (100a-100n) receive security information in a MBS announcement, and determine whether security capability of the MBS supports handling of the traffic protected at the service layer in the security information, based on the security information received over the MBS announcement. Further, the UEs (100a-100n) join a PDU session if the security capability of the MBS supports handling of the traffic protected at the service layer in the security information, and send a Non-access stratum (NAS) message indicating to deliver the MBS traffic via 5GC individual MBS traffic delivery method to the AMF/SMF device (200).

The AMF device (200) performs one of the control plane network functions (NF) of a 5G core network (5GC). The SMF device (200) is primarily responsible for interacting with a decoupled data plane, creating, updating and removing protocol data unit (PDU) sessions and managing session context with a user plane function (UPF). The AMF/SMF device (200) receives the NAS message from the UEs (100a-100n) and delivers the MBS traffic via the 5GC individual MBS traffic delivery method, on joining the PDU session.

FIG. 2 is a block diagram of the UE (100) for supporting protection of the MBS traffic in the wireless network, according to the embodiments as disclosed herein.

Referring to FIG. 2, the UE (100) includes a memory (110), a processor (120), a communicator (130), a MBS traffic management controller (140) and a display (150).

The memory (110) is configured to store the security information in the MBS announcement received by the UE (100). The memory (110) can include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory (110) may, in some examples, be considered a non-transitory storage medium. The term "non-transitory" may indicate that the storage medium is not embodied in a carrier wave or a propagated signal. However, the term "non-transitory" should not be interpreted that the memory (110) is non-movable. In some examples, the memory (110) is configured to store larger amounts of information. In certain examples, a non-transitory storage medium may store data that can, over time, change (e.g., in Random Access Memory (RAM)).

The processor (120) may include one or a plurality of processors. The one or the plurality of processors may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The processor (120) may include multiple cores and is configured to determine the security capability of the MBS in the security information.

In an embodiment, the communicator (130) includes an electronic circuit specific to a standard that enables wired or wireless communication. The communicator (130) is configured to communicate internally between internal hardware components of the UE (100) and with external devices via one or more networks.

In an embodiment, the MBS traffic management controller (140) includes an input receiving unit (141), a security capability determining unit (142), a session management unit (143) and a message transmitting unit (144).

In an embodiment, the input receiving unit (141) is configured to receive the security information in the MBS announcement. The security information includes at least one of the traffic protected at the service layer in the security information, the traffic unprotected at the service layer in the security information, indications for which security procedures are supported by the network: a control-plane procedure or a user-plane procedure, the traffic allowed via the 5GC individual MBS traffic delivery method, the traffic not allowed via the 5GC individual MBS traffic delivery method, different levels of protection supported for point-to-multipoint delivery and point-to-point delivery, and the different levels of protection not supported for point-to-multipoint delivery and point-to-point deliver.

In an embodiment, the security capability determining unit (142) is configured todetermine whether the security capability of the MBS module in the UE (100) supports handling of the traffic protected at the service layer in the security information, based on the security information received over the MBS announcement.

In an embodiment, the session management unit (143) is configured to determine to request individual MBS traffic delivery method or 5GC shared MBS traffic delivery method based on the security capability of the MBS whether there is support to handle the traffic protected at the service layer in the security information. The session management unit (143) selects individual MBS traffic delivery method, if the security capability of the MBS does not support handling of the MBS traffic protected at the service layer, when the MBS traffic protection is applied over the service layer.

In an embodiment, the message transmitting unit (144) is configured to send the NAS message indicating to deliver the MBS traffic via the 5GC individual MBS traffic delivery method to the AMF/SMF device (200) for delivering the MBS traffic via the 5GC individual MBS traffic delivery method, on joining the PDU session, if the session management unit (143) selects individual MBS traffic delivery method.

The MBS traffic management controller (140) is implemented by processing circuitry such as logic gates, integrated circuits, microprocessors, microcontrollers, memory circuits, passive electronic components, active electronic components, optical components, hardwired circuits, or the like, and may optionally be driven by firmware. The circuits may, for example, be embodied in one or more semiconductor chips, or on substrate supports such as printed circuit boards and the like.

At least one of the plurality of modules/components of the MBS traffic management controller (140) may be implemented through an AI model. A function associated with the AI model may be performed through memory (110) and the processor (120). The one or a plurality of processors controls the processing of the input data in accordance with a predefined operating rule or the AI model stored in the non-volatile memory and the volatile memory. The predefined operating rule or artificial intelligence model is provided through training or learning.

Here, being provided through learning means that, by applying a learning process to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning process is a method for training a predetermined target device (for example, a robot) using a plurality of learning data to cause, allow, or control the target device to make a determination or prediction. Examples of learning processes include, but are not limited to, supervised learning, unsupervised learning, semi-supervised learning, or reinforcement learning.

In an embodiment, the display (150) is configured to displaythe NAS message indicated in at least one of a PDU session establishment request, a PDU session modification request, a NAS and/or access stratum (AS) security mode complete message or a registration request message. The display (190) is implemented using touch sensitive technology and comprises one of liquid crystal display (LCD), light emitting diode (LED), etc.

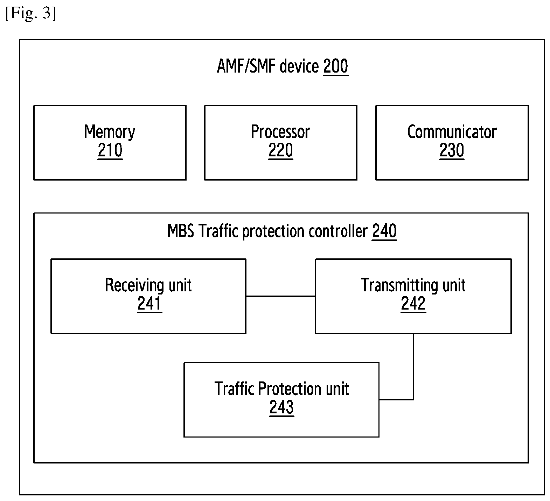

FIG. 3 is a block diagram of the SMF device (200) for supporting protection of the MBS traffic in the wireless network, according to the embodiments as disclosed herein.

Referring to FIG. 3, the SMF device (200) includes a memory (210), a processor (220), a communicator (230), and a MBS traffic protection controller (240).

The memory (210) is configured to store the security information in the MBS announcement transmitted by the UE (100). The memory (210) can include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory (210) may, in some examples, be considered a non-transitory storage medium. The term "non-transitory" may indicate that the storage medium is not embodied in a carrier wave or a propagated signal. However, the term "non-transitory" should not be interpreted that the memory (210) is non-movable. In some examples, the memory (210) is configured to store larger amounts of information. In certain examples, a non-transitory storage medium may store data that can, over time, change (e.g., in Random Access Memory (RAM)).

The processor (220) may include one or a plurality of processors. The one or the plurality of processors may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The processor (220) may include multiple cores and is configured to protect the MBS traffic at a packet data convergence protocol (PDCP) layer between the RAN and the UE based on the security information transmitted from the UE (100).

In an embodiment, the communicator (230) includes an electronic circuit specific to a standard that enables wired or wireless communication. The communicator (230) is configured to communicate internally between internal hardware components of the SMF device (200) and with external devices via one or more networks.

In an embodiment, the MBS traffic protection controller (240) includes a receiving unit (241), a transmitting unit (242) and a traffic protection unit (243).

In an embodiment, the receiving unit (241) is configured to receive the NAS request message indicating to deliver the MBS traffic via 5GC individual MBS traffic delivery method from the UE (100).

In an embodiment, the transmitting unit (242) is configured to transmit the traffic unprotected at the service layer in the security information by a MBS-User Plane Function (UPF) via the 5GC individual MBS traffic delivery method, if the security capability of the MBS is not capable of handling the traffic protected at the service layer in the security information. Further, the transmitting unit (242) is configured to transmit user plane security enforcement information for the PDU session from the UE (100) to a Radio Access Network (RAN) based on the security capability of the MBS. The user plane security enforcement information includes user plane security policy.

In an embodiment, the MBS traffic protection controller (240) is configured to activate protection of the MBS traffic at the packet data convergence protocol (PDCP) layer between the RAN and the UE (100) based on the user plane security policy of the user plane security enforcement information. The user plane security policy determines confidentiality and integrity protection of the MBS traffic at the PDCP layer if no protection is supported at the service layerin the security information. Further, the MBS traffic at the PDCP layer is protected based on the security capability of the MBS or the user plane security policy of the user plane security enforcement information.

Although the FIG. 2 and FIG. 3 show the hardware elements of the UE (100) and the AMF/SMF device (200) but it is to be understood that other embodiments are not limited thereon. In other embodiments, the UE (100) and the AMF/SMF device (200) may include less or more number of elements. Further, the labels or names of the elements are used only for illustrative purpose and does not limit the scope of the invention. One or more components can be combined together to perform same or substantially similar function.

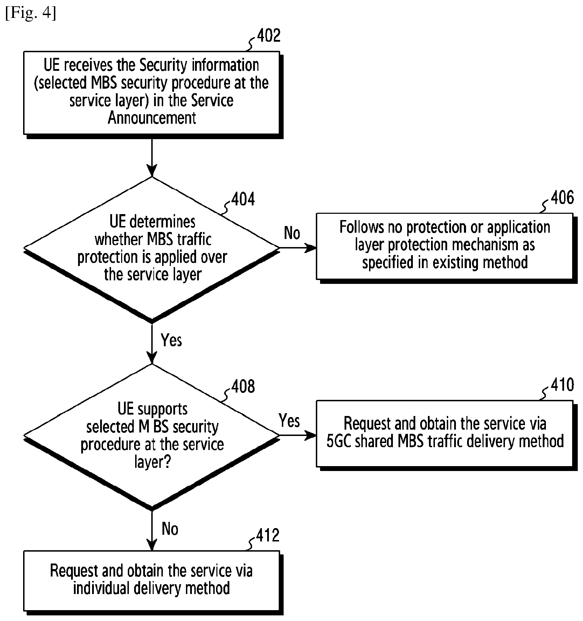

FIG. 4 is a flow chart (200) illustrating a method for determining the MBS traffic delivery method in the wireless network by the UE (100), according to the embodiments as disclosed herein.

Referring to the FIG. 4, at step 402, the method includes the UE (100) receiving the security information in the MBS announcement. The security information includes at least one of a traffic protected at the service layer in the security information, the traffic unprotected at the service layer in the security information, indications for which security procedures are supported by the network: control-plane procedure or user-plane procedure, the traffic allowed via the 5GC individual MBS traffic delivery method, the traffic not allowed via 5GC individual MBS traffic delivery method, different levels of protection supported for point-to-multipoint delivery and point-to-point delivery, and the different levels of protection not supported for point-to-multipoint delivery and point-to-point deliver.For example, in the UE (100) as illustrated in the FIG. 2, the MBS traffic managementcontroller (140)is configured to receive the security information in the MBS announcement.

At step 404, the method includes the UE (100) determining if MBS traffic protection is applied or not over the service layer, based on the security information received in the MBS announcement. For example, in the UE (100) as illustrated in the FIG. 2, the MBS traffic managementcontroller (140) is configured to determine if the MBStraffic protection is applied or not over the service layer, based on the security information received in the MBS announcement.

In an embodiment, the UE (100) determines whether the MBS traffic (MBS session) is protected or unprotected based on the security information received in the MBS announcement. The MBS announcement is provided to the UE (100) by AF or MBSF.

At step 406, the method includes when the MBS traffic (MBS session) is unprotected (protection is not applied at the service layer) based on the security information received in the MBS announcement, the UE (100) follows no protection (free to watch) or application layer protection mechanism as specified in the existing methods.

At step 408, the method includes, after determining that the MBS traffic (session) protection is applied over the service layer, the UE (100) further determines whether its security capability of the MBS supports handling of the protected MBS traffic as specified in the security information received over the MBS announcement, when the MBS traffic protection is applied over the service layer. For example, in the UE (100) as illustrated in the FIG. 2, the MBS traffic managementcontroller (140) is configured to determine whether the UE's security capability of the MBS supports handling of the protected MBS traffic as specified in the security information received over the MBS announcement, when the MBStraffic protection is applied over the service layer.

At step 410, the method includes the UE (100) determining it does support the network selected MBS security procedure at the service layer, then the UE (100) requests and obtains the MBS session via the 5GC shared MBS traffic delivery method. For example, in the UE (100) as illustrated in the FIG. 2, the MBS traffic managementcontroller (140) is configured todetermine if the 5GC shared MBS traffic delivery method to be used by the UE (100) to obtain the MBS traffic when the UE's security capability of the MBS does supports handling of the protected MBS traffic as specified in the security information received over the MBS announcement.

At step 412, the method includes the UE (100) determining it does not support the network selected MBS security procedure at the service layer, then the UE (100) requests and obtains the MBS session via the individual MBS traffic delivery method. For example, in the UE (100) as illustrated in the FIG. 2, the MBS traffic managementcontroller (140) is configured to determine if the individual traffic delivery method to be used by the UE (100) to obtain MBS traffic when the UE's security capability of the MBS does not supports handling of the protected MBS traffic as specified in the security information received over the MBS announcement.

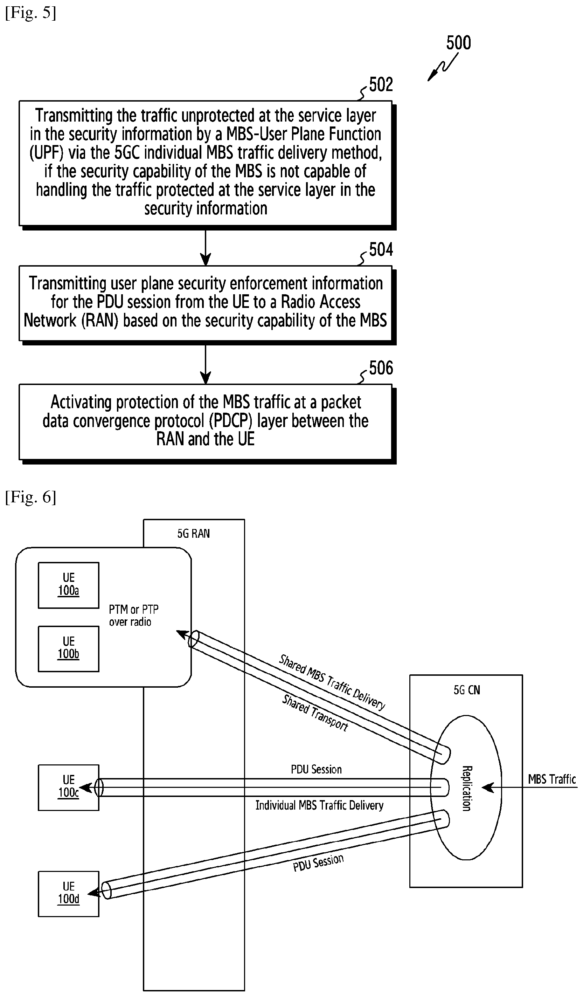

FIG. 5 is a flow chart illustrating a method for supporting protection of the MBS traffic in the wireless network by the SMF device (200), according to the embodiments as disclosed herein.

Referring to the FIG. 5, at step 502, the method includes the SMF device (200) transmitting the traffic unprotected at the service layer in the security information by the MBS-UPF via the 5GC individual MBS traffic delivery method, if the security capability of the MBS is not capable of handling the traffic protected at the service layer in the security information.For example, in the SMF device (200) as illustrated in the FIG. 3, the MBS traffic protectioncontroller (240)is configured to transmit the traffic unprotected at the service layer in the security information by the MBS-UPF via the 5GC individual MBS traffic delivery method, if the security capability of the MBS is not capable of handling the traffic protected at the service layer in the security information.

At step 504, the method includes the SMF device (200) transmitting the user plane security enforcement information for the PDU session from the UE (100) to the RANbased on the security capability of the MBS. The user plane security enforcement information includes user plane security policy. For example, in the SMF device (200) as illustrated in the FIG. 3, the MBS traffic protectioncontroller (240) is configured to transmit the user plane security enforcement information for the PDU session from the UE to the RANbased on the security capability of the MBS.

At step 506, the method includes the SMF device (200) activating protection of the MBS traffic at the PDCP layer between the RAN and the UE (100) based on the user plane security policy of the user plane security enforcement information.For example, in the SMF device (200) as illustrated in the FIG. 3, the MBS traffic protectioncontroller (240)is configured to activate protection of the MBS traffic at the PDCP layer between the RAN and the UE (100) based on the user plane security policy of the user plane security enforcement information.

The various actions, acts, blocks, steps, or the like in the method may be performed in the order presented, in a different order or simultaneously. Further, in some embodiments, some of the actions, acts, blocks, steps, or the like may be omitted, added, modified, skipped, or the like without departing from the scope of the invention.

FIG. 6 is a schematic view illustrating a delivery method, according to the prior arts.

Referring to FIG. 6, the different delivery methods for MBS multicast service are depicted. In view of 5G CN, the MBS multicast service is delivered using two methods, namely:
(i)5GC Individual MBS traffic delivery method:
(ii) 5GC Shared MBS traffic delivery method: where the 5GC network receives the single copy of the MBS data packets and delivers the single copy of those MBS data packets to the RAN node, which then delivers to one or multiple UEs (100a-100d).

If 5GC individual MBS traffic delivery method is supported, a same received single copy of the MBS data packets by the CN is delivered via both the 5GC individual MBS traffic delivery method for some UEs(100c,100d), and the 5GC shared MBS traffic delivery method for other UEs (100a,100b).

Further, in view of RAN, (in case of the shared delivery) two delivery methods are available for the transmission of MBS packet flows over radio. They are mentioned as follows:
(ii.a) Point-to-Point (PTP) delivery method: the RAN node delivers separate copies of MBS data packet over radio to individual UE; and
(ii.b) Point-to-Multipoint (PTM) delivery method: the RAN node delivers the single copy of the MBS data packets over the radio to a set of UEs (100a,100b).

The RAN node may use a combination of PTP/PTM to deliver the MBS packet to the UEs (100a-100d).

As depicted in the FIG. 6, PTP or PTM delivery (with 5GC shared delivery method) and the 5GC individual delivery method may be used at the same time for the multicast MBS session. However, in existing methods, only the 5GC shared MBS traffic delivery method with PTM delivery for the MBS broadcast service is applicable.

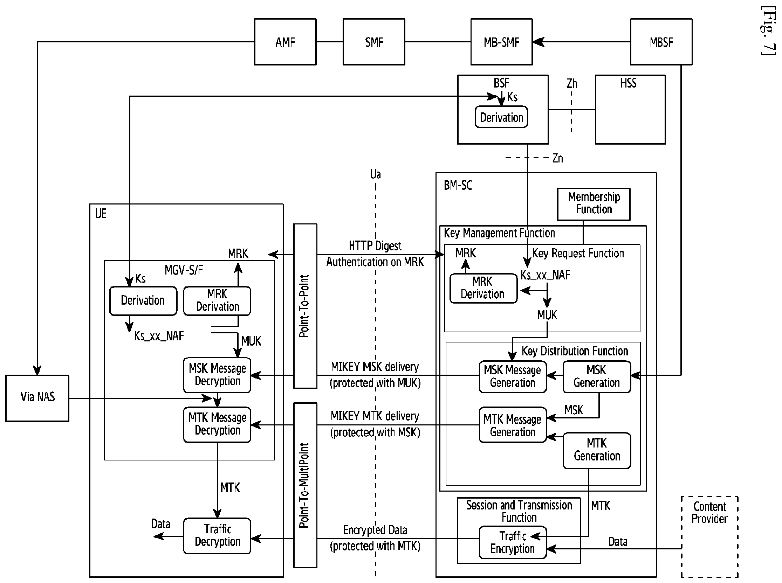

FIG. 7 is a block diagram illustrating a process of key distribution and generation, according to the prior arts.

Referring to FIG. 7, the key generation and the key distribution methods with both the control plane (CP) and the user plane (UP) are depicted. In the existing method, an issue with the specified MBS security is that the network is forced to disable the security as to serve its entire subscriber, if the UE (100) does not support the service layer security and/or does not support the reception of the key via CP based mechanism or UP based mechanism, which is supported by the network. Thereby, making the MBS content to be transmitted in clear over the air, leading to theft of the service in cases where the UE without a valid subscription gets the service by tuning to the radio configuration to listen to the unprotected MBS transmissions. In some cases, a set of malicious devices with valid subscription indicating no support for the MBS security can also enforce the network not to protect the MBS content over the air. Therefore, in the proposed method, support (implement) for the MBS protection at the service layer and support for the key distribution/reception mechanism for the network and the UE are made optional.

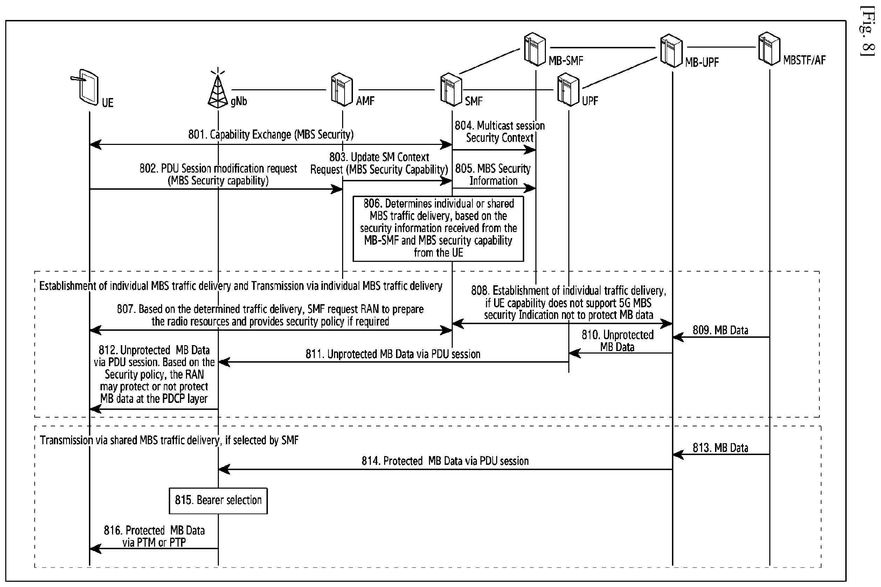

FIG. 8 is a flow diagram illustrating a method for supporting protection over the PDCP layer for the 5GC individual traffic delivery method when the service layer protection is not supported, according to the embodiments as disclosed herein.

Referring to FIG. 8, at step 801, Capability Exchange: the UE (100) indicates whether protection of the MB traffic is supported at the service layer or not, by explicit capability indication exchange. Based on the UE capability parameter included in the UE capability information elements, the network (for say, SMF) knows whether the UE (100) supports the MB traffic protection at the service layer or not.

At step 802, the UE (100) includes the indication of support for the MB traffic protection at the service layer capability or no support as an explicit parameter in an access stratum (AS) or Non-access stratum (NAS) procedure. The AS/NAS procedures is one of: UE capability exchange or PDU establishment procedure (UE includes the indication in the PDU Session Establishment Request) or PDU Session Modification Request or Security Mode Command (SMC) procedure (NAS and/or AS Security Mode Complete message) or Registration procedure (Registration Request message, as part of AN parameter or part of UE Radio Capability Update or an independent new parameter).

At step 803, the UE included MBS security capability is provided by the AMF to the SMF in Nsmf service request. The Nsmf service request is one of: Nsmf_PDUSession_UpdateSMContext request. The MBS security capability of the UE (100) is at least one of:
(a) Supports Key reception via Control Plane or not;
(b) Supports Key reception via User Plane or not; and
(c) Supports handling of the MBS traffic protection (protected MBS data traffic) at service/application layer.

At step 805, the SMF interacts with the MB-SMF to retrieve the security and other required information about the indicated MBS session context. The MBS session context is indicated as Nmbsmf_ MBSSession_ContextStatusSubscribe request indicating that the SMF wants to subscribe the MBS session context. SMF interacts with the MB-SMF to retrieve information about the indicated multicast session context information or multicast quality of service (QoS) flow information (e.g., QoS profile(s) for multicast MBS session), [start time], [session status indication (active/inactive)], [MBS session authorization information (MBS session opens for any user)], LL MC address]) and to subscribe to events notifications related to the multicast session.

The MB-SMF determines whether a user is authorized to join the multicast session as follows: the MB-SMF checks the user subscription data received from a unified data management (UDM) UDM to determine whether the user is allowed to use any multicast service. If so, the MB-SMF checks the received indication whether the multicast session is open for any user. If the multicast session is not open to any user, the MB-SMF checks the user subscription data received from the UDM to determine whether the MBS session ID is included.

In an embodiment, the MB-SMF also indicates whether the MBS data traffic is protected (at service layer) or not protected by the MBSTF/MB-UPF/UPF to the SMF. The information on the traffic protection is part of the MBS security information. The SMF obtains the MBS traffic protection information, when the SMF interacts with the MB-SMF to retrieve information about the indicated multicast session context information (i.e., the MB-SMF provides the information about the protection of the MBS traffic in response to the request from the SMF to retrieve information about the indicated multicast session context information). Additionally, the MB-SMF also indicates whether the MBS data traffic is protected or not protected at the service layer by the MBSTF/MB-UPF/UPF to the SMF as part of notifications related to the multicast session. The AF indicates to the 5G Core Network whether the MBS data traffic is protected (at service layer) or not protected using the MBS Session Configuration procedure.

At step 806, on successful retrieval of the MBS security information (including whether the MBS data traffic is protected or not protected at the service layer by the MBSTF/MB-UPF/UPF), the SMF determines the delivery method i.e., individual or shared MBS traffic delivery based on the security information received from the MB-SMF and MBS security capability from the UE (100), if a base station such as for example but not limited to a gNB support 5G MBS. Based on the decision, the SMF either initiates individual MBS traffic delivery or shared MBS traffic delivery.

In an embodiment, the SMF determines individual MBS traffic delivery method for the UE (100), if the UE capability does not support MBS traffic protection at the service layer and the security information from the MB-SMF indicates MBS traffic is protected.

In an embodiment, the SMF determines the shared MBS traffic delivery method for the UE (100), if the UE capability does not support MBS traffic protection at the service layer and the security information from the MB-SMF indicates the MBS traffic is unprotected.

In an embodiment, the SMF determines the shared MBS traffic delivery method for the UE (100), if the UE capability support MBS traffic protection at the service layer and the security information from the MB-SMF indicates the MBS traffic is protected.

In an embodiment, the SMF determines the shared MBS traffic delivery method for the UE (100), if the UE capability support MBS traffic protection at the service layer and the security information from the MB-SMF indicates the MBS traffic is unprotected.

At step 807, if the SMF determines individual MBS traffic delivery method for the UE (100), then the SMF initiates establishment of the individual MBS traffic delivery. Based on the determined traffic delivery method, the SMF requests the RAN to set up the radio resources and provides security policy included in the user plane security enforcement information to the RAN.

At step 808, the SMF determines the user plane security enforcement information which includes the security policy whether the security is required at the PDCP layer or not, for the MBS session via the individual MBS traffic delivery method, based on the security policy. The security policy is used to determine the confidentiality and integrity protection of the MB traffic at PDCP layer if there is no protection supported at the service layer.

At step 809, the SMF determines the security policy on whether particular MBS traffic (for example, DNN and/or S-NSSAI and/or MBS Session ID and/or Serving PLMN ID and/or HPLMNID and/or other possible parameters) needs to be protected at the PDCP layer or not.

At step 810, the MB-SMF indicates to the SMF whether the MBS data traffic required to be protected at AS or PDCP layer or not to be protected (preferred or not needed). The information on the traffic protection to be protected or not, at the PDCP layer, is a part of the MBS security information. The SMF obtains the MBS traffic protection information, when the SMF interacts with the MB-SMF to retrieve the information about the indicated multicast session context information.

At step 811, the SMF establishes the PDU session between the UPF and the UE (100). Also, when the SMF invokes Nmbsmf_ MBSsession_ContextUpdate request (MBS Session ID or downlink tunnel ID) towards the MB-SMF that includes MBS security indication or MBS security information, to indicate/inform the MB-UPF to provide the MBS traffic to the UPF with or without protection.

In an embodiment, the MB-SMF configures the MB-UPF to transmit the multicast session data towards the UPF using the possibly received downlink tunnel ID, with or without protection, based on the received MBS security information.

For multicast transport between the MB-UPF and the UPF, the SMF configures the UPF to receive the multicast session data. The UPF forwards the multicast session data to the PDU session.

In an embodiment, the MB-SMF configures the MB-UPF to forward the received multicast session data within the PDU session and also indicates the PDU session and MBS security information to the MB-UPF.

In an embodiment, the MB-UPF receives multicast PDUs, either directly from the content provider or via a multicast/broadcast session transport function (MBSTF) that manipulates the multicast session data. The MB-UPF indicates the content provider's content server or a content delivery network (CDN) application server or the MBSTF to provide both the unprotected and/or the protected MB data. On receiving the MB data, the MB-UPF decides to send the MB data unprotected or protected to the RAN node as per the received indication.

At step 812, the RAN node decides to send the unprotected or the protected MB data to the UE (100). The RAN may or may not protect the MB data over the PDCP layer based on the security policy received from the SMF.

In an embodiment, the SMF configures the RAN node with the MBS traffic specific security policy. The security policy is used to determine the confidentiality and integrity protection of the MB traffic at the PDCP layer if there is no protection supported at the service layer.

At step 813, Establishment of the shared MBS traffic delivery: the MB-UPF receives the multicast PDUs, either directly from the content provider or via the MBSTF that manipulates the multicast session data.

At step 814, on receiving the MB data, the MB-UPF decides to send the MB data protected to the RAN node as per the received indication and the UE capability.

At step 815, the NG-RAN selects the PTM or the PTP radio bearers to deliver the multicast PDUs to the UE(s) (100) that have joined the multicast session.

At step 816, the NG-RAN transmits the multicast session data to the UE(s) (100) using the selected PTM or PTP radio bearer(s).

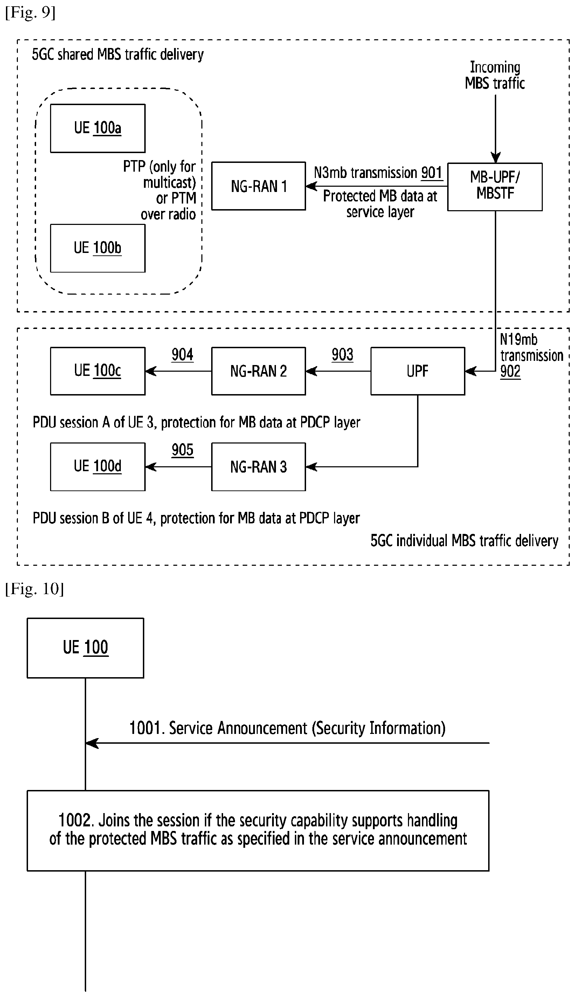

FIG. 9 is a block diagram illustrating user plane MBS data transmission from the CDN to the UEs (100a-100d), according to the embodiments as disclosed herein.

Referring to FIG. 9, the user plane MBS data transmission from the CDN to the UEs (100a-100d) is depicted. The MBS traffic from the CDN is not protected at the service layer. Once the data reaches the MBSTF or directly reaches the MB-UPF, based on the network/operator policy, the MBSTF or the MB-UPF determines whether to protect the MBS data traffic at the service layer or not to protect the data traffic. If the data reaches MBSTF, the MBSTF determines to send the protected and unprotected data as separate data stream. Both the data streams have same source/destination Internet Protocol (IP)-Address, but based on the MB session ID, the MB-UPF should be able to differentiate the data stream to send as protected or unprotected MB data traffic.

In another embodiment, a list of port numbers associated with the protected or unprotected data traffic i.e., a pre-assigned port number for sending the protected data traffic and another pre-assigned port number for sending the unprotected data traffic are included.

In another embodiment, during session create request, the MB traffic (for MB session ID) to be sent in protected or as unprotected as plain IP packets is determined based on the MB session ID indicated during session create or bearer create procedure.

Referring to FIG. 9, at step 901, the protected MBS data are transmitted to the UEs (100a-100d) via the 5GC shared MBS traffic delivery method. The UEs (100a, 100b) that are capable of handling the MBS service layer protected traffic, receives the protected MBS data traffic via the 5GC shared MBS traffic delivery method.

At step 902, for the UE (100c), that is not capable of handling the MBS service layer protected traffic, the unprotected MBS traffic is transmitted by the MBS-UPF via the 5GC individual MBS traffic delivery method.

At step 903, for 5GC individual MBS traffic delivery method, the SMF determines the UP security enforcement information for the PDU session at the PDU session modification procedure based on the UE's MBS security capability along with other capabilities/configurations and provides the determined UP security enforcement information to the RAN. Based on the received UP security enforcement information which includes UP security policy, the RAN enforces the security of the MBS traffic over the PDU session.

At step 904, the PDU session A illustrates activation of protection at the PDCP layer between the RAN and the UE (100c), based on the received UP security policy.

At step 905, the PDU session B of UE (100d) illustrates deactivation of protection at the PDCP layer between the RAN and the UE (100d), based on the received UP security policy.

In another embodiment, based on the bearer selection i.e., NG-RAN selects the PTM or the PTP radio bearers to deliver the multicast PDUs to the UE (100a-100d) that have joined the multicast session, the SMF determines the UP security enforcement information for the PDU session at PDU session modification procedure based on UE's MBS security capability along with other capabilities/configurations and provides to the RAN. The SMF configures different security policies for the UEs (100a-100d) based on the PTM or the PTP. For PTM case, the SMF configures the security policy with applies to all the UEs (100a-100d) intended to receive the MB traffic in PTM manner. For PTP case, the SMF configures the security policy for individual UEs (100a-100d). Based on the received security policy, the NG-RAN activates or deactivates the protection of the MB data over the PDCP layer.

In another embodiment, a policy control function (PCF) generates security policy rules for the MBS session based on the received service requirement and provides the policy rules to the MB-SMF i.e., for PTM case, the SMF configures the security policy with applies to all the UEs (100a-100d) intended to receive the MB traffic in PTM manner. For PTP case, the SMF configures the security policy for individual UEs (100a-100d). Based on the received security policy, the NG-RAN activates or deactivates the protection of the MB data over the PDCP layer.

FIG. 10 is a flow diagram illustrating a method for joining the session for supporting protection of the MBS traffic in the wireless network by the UE, according to the embodiments as disclosed herein.

Referring to FIG. 10, at step 1001, the UE (100) receives the security information in the service announcement. The service announcement may be provided to the UE (100) by an application function (AF) or multicast and broadcast service function (MBSF), or may be retrieved by the UE (100) from the AF or MBSF.

The security information includes at least one of:
* Traffic protected at service layer
* Traffic unprotected at service layer
* If protected - Key distribution via CP and/or UP
* Traffic via 5GC Individual MBS traffic delivery method is allowed or not; and
* If 5GC individual MBS traffic delivery method is allowed, different level of protection for PTM and PTP is supported or not.

At step 1002, based on the received security information, the UE (100) joins the session if the security capability of the MBS (UE's capability to handle the security protection of the MBS traffic at the service layer) supports handling of the protected MBS traffic as specified in the security information received over the service announcement.

Further as illustrated in the FIG. 9, for the UE (100), that is not capable of handling the MBS service layer protected traffic, the unprotected MBS traffic (no protection applied at the service layer) is transmitted by the MBS-UPF via the 5GC individual MBS traffic delivery method. For 5GC Individual MBS traffic delivery method, the SMF determines the UP security enforcement information for the PDU session at the PDU session modification procedure based on UE's MBS security capability and/or indication in the PDU session establishment/modification request along with other capabilities/configurations and provides to the RAN. Based on the received UP security enforcement information which includes the UP security policy, the RAN enforces the security of the MBS traffic over the PDU session. The activation of protection at the PDCP layer between the RAN and the UE is based on the received UP security policy.

In an embodiment, the MBS session configuration is used by the AF to configure the MBS session towards 5GC. During configuration phase, the RAN is indicated to support the MB data protection over the PDCP layer if the service layer protection is not supported.

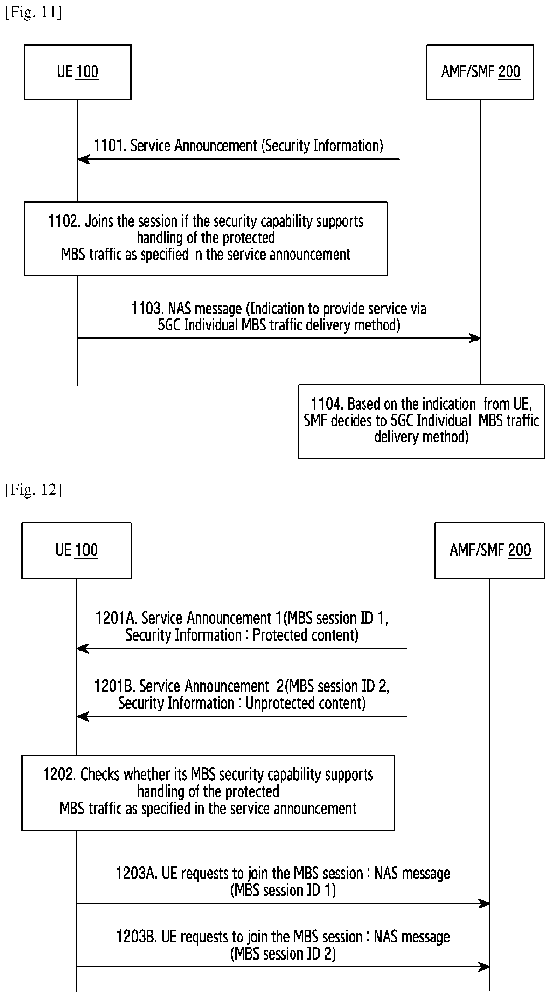

FIG. 11 is a flow diagram illustrating a method for supporting protection of the MBS traffic in the wireless network, according to the embodiments as disclosed herein.

Referring to FIG. 11, at step 1101, the UE (100) receives the security information in the service announcement. The service announcement is provided to the UE (100) by the AF or the MBSF, or is retrieved by the UE (100) from the AF or the MBSF.

The security information includes at least one of:
* Traffic protected at the service layer
* Traffic unprotected at the service layer
* If protected - Key distribution via CP and/or UP
* Traffic via 5GC Individual MBS traffic delivery method is allowed or not; and
* If 5GC individual MBS traffic delivery method is allowed, different level of protection for PTM and PTP is supported or not.

At step 1102, based on the received security information, the UE (100) checks if the security capability of the MBS (UE's capability to handle the security protection of the MBS traffic at the service layer) supports handling of the protected MBS traffic as specified in the security information received over the service announcement.

At step 1103, if the security capability of the MBS does not support handling of the protected MBS traffic at the service layer as specified in the security information received over the service announcement, the UE (100) includes the indication to support/provide the service via 5GC individual MBS traffic delivery method as an explicit parameter in the NAS procedure. The NAS procedures is one of: UE capability exchange or PDU establishment procedure (UE includes the indication in the PDU Session Establishment Request) or PDU Session Modification Request or SMC procedure (NAS and/or AS Security Mode Complete message) or Registration procedure (Registration Request message, as a part of AN parameter or a part of UE Radio Capability Update or an independent new parameter).

At step 1104, if the UE (100) supports 5GC individual MBS traffic delivery method, the SMF decides to opt for 5GC individual MBS traffic delivery method and step 807 to 812 is followed as described in the FIG.8.

Further as illustrated in the FIG. 9, for the UE (100), that is not capable of handling the MBS service layer protected traffic, the unprotected MBS traffic is transmitted by the MBS-UPF via the 5GC individual MBS traffic delivery method. For 5GC individual MBS traffic delivery method, the SMF determines the UP security enforcement information for the PDU session at the PDU session modification procedure based on UE's MBS security capability along with other capabilities/configurations and provides to the RAN. Based on the received UP security enforcement information which includes the UP security policy, the RAN enforces the security of the MBS traffic over the PDU session. The activation of protection at the PDCP layer between the RAN and the UE (100) is based on the received UP security policy.

FIG. 12 is a flow diagram illustrating a method for determining protected and unprotected MB traffic based on a type of the MB traffic, according to the embodiments as disclosed herein.

Referring to FIG. 12, the protected and unprotected MB traffic is determined based on the type of MB traffic. For example, the unprotected content may be standard quality (SD) (not high definition (HD) or above quality), with advertisements, and the like.

At steps 1201A and 1201B, the UE (100) receives the security information in the service announcement. The service announcement is provided to the UE (100) by the AF or the MBSF, or is retrieved by the UE (100) from the AF or the MBSF.

The security information includes at least one of:
* Traffic protected at the service layer
* Traffic unprotected at the service layer
* If protected - Key distribution via CP and/or UP
* Traffic via 5GC Individual MBS traffic delivery method is allowed or not; and
* If 5GC individual MBS traffic delivery method is allowed, different level of protection for PTM and PTP is supported or not.

At step 1202, the UE (100) checks whether the security capability of the MBS supports handling of the protected MBS traffic as specified in the service announcement.

At steps 1203A and 1203B, based on the received security information, the UE (100) joins the session if the security capability supports or not the handling of the protected or unprotected MBS traffic as specified in the security information received over the service announcement.

In an embodiment, the UE (100) includes the indication to support/provide service via the 5GC individual MBS traffic delivery method as an explicit parameter in the NAS procedure for the unprotected contents at the service layer.

In an embodiment, the UE (100) includes the MBS session ID in the NAS message. Based on the received MBS session ID and the UEs capability, the SMF/AMF decides to opt for 5GC individual MBS traffic delivery method for the unprotected content and step 807 to 812 is followed as described in FIG. 8. Further as illustrated in FIG. 9, for the UE (100), that is not capable of handling the MBS service layer protected traffic, the unprotected MBS traffic is transmitted by the MBS-UPF via the 5GC Individual MBS traffic delivery method. For 5GC individual MBS traffic delivery method, the SMF determines the UP security enforcement information for the PDU session at the PDU session modification procedure based on UE's MBS security capability along with other capabilities/configurations and provides to the RAN. Based on the received UP security enforcement information which includes the UP security policy, the RAN enforces the security of the MBS traffic over the PDU session. The activation of protection at the PDCP layer between the RAN and the UE is based on the received UP security policy.

Minimum participant count for MBS session: In an embodiment, the MBS session configuration carries the number of minimum participant count required for supporting the 5GC individual traffic delivery method. Based on the configuration, the AMF/SMF/MB-SMF/MB-BSF (core network) sends the list of participants to be invited for the supporting the 5GC individual traffic delivery method over the NAS message/any new message. The term "participants" here refers to "UEs" in the MBS session and is used interchangeably.

In an embodiment, if the number of UEs is less than the count specified in the configuration parameter, the RAN node sends the unprotected MBS traffic individually to each UEs (100) and the RAN node activates or deactivates the protection of MBS traffic over the PDCP layer based on the configured security policy. The security material to be used for achieving end to end encryption is generated by the RAN node and shared to the participants as agreed in third generation partnership project (3GPP). This method is applied for less number of UEs (100) in the MBS session. The threshold of number of UEs (100) in the MBS session is decided by a network operator.

In an embodiment, the number of participants changes when the UE (100) joins or leaves the MBS session i.e. the UE (100) indicates to 5GC that such UE (100) wants to receive the multicast data identified by a specific MBS session ID or the UE (100) no longer wants to receive the multicast data identified by the specific MBS session ID. In such scenarios, the MBSTF/MB-UPF determines the traffic delivery method dynamically i.e., if the number of UEs (100) in the MBS session is above the determined threshold, the MBSTF/MB-UPF decides to send the MBS traffic in the shared traffic delivery method. In such cases, the SMF configures the UP security enforcement information accordingly i.e., the SMF configures the security policy for deactivating or disabling the protection over the PDCP layer, to avoid protection over protection.

In an embodiment, when there is less number of participants, the MBS traffic is sent as in individual traffic delivery method. If the service layer protection is supported, the SMF determines and sets the security enforcement information/security policy as to disable or deactivate the protection over the PDCP layer.

In an embodiment, in view of the NG-RAN node, the PCF generates dynamic security policy rules for the MBS session based on the received service requirement and provides the policy rules to the MB-SMF i.e., in case of switching from PTP to PTM case, the SMF configures the security policy to the NG-RAN so that if NG-RAN goes for PTM, then the protection is applied to all the UEs (100) intended to receive the MB traffic in same manner. For PTP case, even if SMF configures the security policy for group of UEs (100a-100n), the NG-RAN determines the security policy for each UE (100) if decided to go for PTP traffic delivery.

In an embodiment, considering the scenarios of the UEs across MBS cell to the MBS cell, the MBS cell to Non-MBS cell and the Non-MBS cell to the MBS cell.
(i) When the UE transitions from the MBS cell supporting service layer protection to the MBS cell not supporting service layer protection, the SMF determines the transition and decides for individual traffic delivery with unprotected MB data. Then, based on the configured policy, the NG-RAN determines to either activate or deactivate the protection over the PDCP layer.
(ii) When the UE transitions from the MBS cell supporting service layer protection to the non-MBS cell, the SMF determines the transition and updates the UP security policy enforcement and decides for the individual traffic delivery with unprotected MB data. Then, based on the configured policy, the NG-RAN determines to either activate or deactivate the protection over PDCP layer.
(iii) When the UE transitions from the non-MBS cell to the MBS cell, the SMF determines the transition and updates the UP security enforcement. If service layer protection is supported, then the SMF determines to opt for the shared traffic delivery method otherwise decides for individual traffic delivery with the unprotected MB data. Then, based on the configured policy, the NG-RAN determines to either activate or deactivate the protection over the PDCP layer. For each transition, the MBSTF/MB-UPF updates the UP security enforcement information.

In another embodiment, the MBSTF/MB-SMF determines and enables at least one security mechanism i.e., either MBS based when the service layer protection is supported and/or a data radio bearer (DRB) when the service layer protection is not supported.

In another embodiment, considering the scenario of multicast service delivery in RRC_INACTIVE mode for UEs (100). In RRC _INACTIVE mode, UEs may still access the multicast services along with the service layer security mechanism. However, DRB access (individual MBS traffic delivery) is not available for these UEs (100). The reason for the transition of the UEs (100) and/or MBS multicast services to RRC_INACTIVE mode might likely be congestion situation on cell/network. In such cases, even if the UE indicates in its capability of supporting individual traffic delivery and/or MBS security information received from the MB-SMF and if SMF determines the UE to be in RRC-INACTIVE state, the UE should be restricted from receiving the MB traffic if the service layer protection is not supported.

In an embodiment, the MBSTF/ MB-SMF selects the MB session IDs of UEs supporting the service layer protection and decides to opt for the shared traffic delivery method. MB session IDs of UEs which are in RRC_INACTIVE mode may not be able to allowed to receive the MB traffic even if the UE is a member of the MBS session i.e., MB-UPF/SMF should not opt for individual traffic delivery method as the PDCP layer protection is disabled.

In an embodiment, considering a scenario when UEs transition from the individual MBS traffic delivery to the shared traffic delivery. If the service layer protection is not supported by the UE, the UE should not receive any MB session traffic.

In another embodiment, considering a scenario when the UEs transition from the shared MBS traffic delivery to the individual traffic delivery, when the service layer protection is supported, the SMF should set the security policy as such to disable or deactivate the protection over the PDCP layer. When the service layer protection is not supported, the SMF should configure the security policy such as to protect the MB traffic over the PDCP layer. The decision on the security policy depends also on the UE resource capability, or the type of the MB traffic.

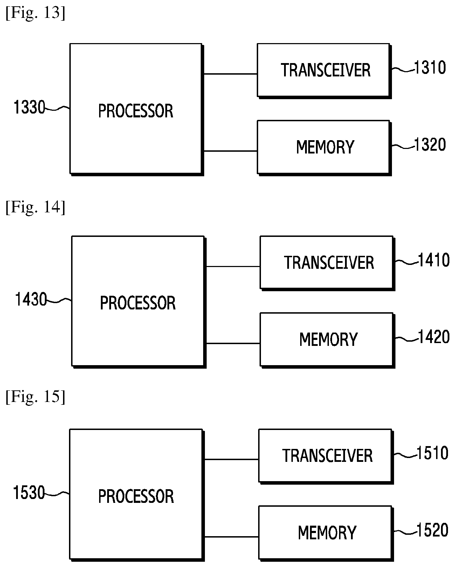

FIG. 13 is a block diagram illustrating a structure of a UE according to an embodiment of the disclosure.

As shown in FIG. 13, the UE according to an embodiment may include a transceiver 1310, a memory 1320, and a processor 1330. The transceiver 1310, the memory 1320, and the processor 1330 of the UE may operate according to a communication method of the UE described above. However, the components of the UE are not limited thereto. For example, the UE may include more or fewer components than those described above. In addition, the processor 1330, the transceiver 1310, and the memory 1320 may be implemented as a single chip. Also, the processor 1330 may include at least one processor. Furthermore, the UE of FIG. 13 corresponds to the UE of the FIG. 2.

The transceiver 1310 collectively refers to a UE receiver and a UE transmitter, and may transmit/receive a signal to/from a base station or a network entity. The signal transmitted or received to or from the base station or a network entity may include control information and data. The transceiver 1310 may include a RF transmitter for up-converting and amplifying a frequency of a transmitted signal, and a RF receiver for amplifying low-noise and down-converting a frequency of a received signal. However, this is only an example of the transceiver 1310 and components of the transceiver 1310 are not limited to the RF transmitter and the RF receiver.

Also, the transceiver 1310 may receive and output, to the processor 1330, a signal through a wireless channel, and transmit a signal output from the processor 1330 through the wireless channel.

The memory 1320 may store a program and data required for operations of the UE. Also, the memory 1320 may store control information or data included in a signal obtained by the UE. The memory 1320 may be a storage medium, such as read-only memory (ROM), random access memory (RAM), a hard disk, a CD-ROM, and a DVD, or a combination of storage media.

The processor 1330 may control a series of processes such that the UE operates as described above. For example, the transceiver 1310 may receive a data signal including a control signal transmitted by the base station or the network entity, and the processor 1330 may determine a result of receiving the control signal and the data signal transmitted by the base station or the network entity.

FIG. 14 is a block diagram illustrating a structure of a base station according to an embodiment of the disclosure.

As shown in FIG. 14, the base station according to an embodiment may include a transceiver 1410, a memory 1420, and a processor 1430. The transceiver 1410, the memory 1420, and the processor 1430 of the base station may operate according to a communication method of the base station described above. However, the components of the base station are not limited thereto. For example, the base station may include more or fewer components than those described above. In addition, the processor 1430, the transceiver 1410, and the memory 1420 may be implemented as a single chip. Also, the processor 1430 may include at least one processor. Furthermore, the base station of FIG. 14 corresponds to the BS (e.g., gNb) of the FIG. 8.

The transceiver 1410 collectively refers to a base station receiver and a base station transmitter, and may transmit/receive a signal to/from a terminal (UE) or a network entity. The signal transmitted or received to or from the terminal or a network entity may include control information and data. The transceiver 1410 may include a RF transmitter for up-converting and amplifying a frequency of a transmitted signal, and a RF receiver for amplifying low-noise and down-converting a frequency of a received signal. However, this is only an example of the transceiver 1410 and components of the transceiver 1410 are not limited to the RF transmitter and the RF receiver.

Also, the transceiver 1410 may receive and output, to the processor 1430, a signal through a wireless channel, and transmit a signal output from the processor 1430 through the wireless channel.

The memory 1420 may store a program and data required for operations of the base station. Also, the memory 1420 may store control information or data included in a signal obtained by the base station. The memory 1420 may be a storage medium, such as read-only memory (ROM), random access memory (RAM), a hard disk, a CD-ROM, and a DVD, or a combination of storage media.

The processor 1430 may control a series of processes such that the base station operates as described above. For example, the transceiver 1410 may receive a data signal including a control signal transmitted by the terminal, and the processor 1430 may determine a result of receiving the control signal and the data signal transmitted by the terminal.

Fig. 15 is a block diagram illustrating a structure of a network entity according to an embodiment of the disclosure.

As shown in Fig. 15, the network entity of the present disclosure may include a transceiver 1510, a memory 1520, and a processor 1530. The transceiver 1510, the memory 1520, and the processor 1530 of the network entity may operate according to a communication method of the network entity described above. However, the components of the terminal are not limited thereto. For example, the network entity may include more or fewer components than those described above. In addition, the processor 1530, the transceiver 1510, and the memory 1520 may be implemented as a single chip. Also, the processor 830 may include at least one processor. Furthermore, the network entity illustrated in Fig. 15 may correspond to the network entity (e.g., AMF/SMF device (200)) illustrated in Fig 3.

The transceiver 1510 collectively refers to a network entity receiver and a network entity transmitter, and may transmit/receive a signal to/from a base station or a UE. The signal transmitted or received to or from the base station or the UE may include control information and data. In this regard, the transceiver 1510 may include a RF transmitter for up-converting and amplifying a frequency of a transmitted signal, and a RF receiver for amplifying low-noise and down-converting a frequency of a received signal. However, this is only an example of the transceiver 1510 and components of the transceiver 1510 are not limited to the RF transmitter and the RF receiver.

Also, the transceiver 1510 may receive and output, to the processor 1530, a signal through a wireless channel, and transmit a signal output from the processor 1530 through the wireless channel.

The memory 1520 may store a program and data required for operations of the network entity. Also, the memory 1520 may store control information or data included in a signal obtained by the network entity. The memory 1520 may be a storage medium, such as ROM, RAM, a hard disk, a CD-ROM, and a DVD, or a combination of storage media.

The processor 1530 may control a series of processes such that the network entity operates as described above. For example, the transceiver 1510 may receive a data signal including a control signal, and the processor 1530 may determine a result of receiving the data signal.

The foregoing description of the specific embodiments will so fully reveal the general nature of the embodiments herein that others can, by applying current knowledge, readily modify and or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

The methods according to the embodiments described in the claims or the detailed description of the present disclosure may be implemented in hardware, software, or a combination of hardware and software.

When the electrical structures and methods are implemented in software, a computer-readable recording medium having one or more programs (software modules) recorded thereon may be provided. The one or more programs recorded on the computer-readable recording medium are configured to be executable by one or more processors in an electronic device. The one or more programs include instructions to execute the methods according to the embodiments described in the claims or the detailed description of the present disclosure.

The programs (e.g., software modules or software) may be stored in random access memory (RAM), non-volatile memory including flash memory, read-only memory (ROM), electrically erasable programmable read-only memory (EEPROM), a magnetic disc storage device, compact disc-ROM (CD-ROM), a digital versatile disc (DVD), another type of optical storage device, or a magnetic cassette. Alternatively, the programs may be stored in a memory system including a combination of some or all of the above-mentioned memory devices. In addition, each memory device may be included by a plural number.

The programs may also be stored in an attachable storage device which is accessible through a communication network such as the Internet, an intranet, a local area network (LAN), a wireless LAN (WLAN), or a storage area network (SAN), or a combination thereof. The storage device may be connected through an external port to an apparatus according the embodiments of the present disclosure. Another storage device on the communication network may also be connected to the apparatus performing the embodiments of the present disclosure.

In the afore-described embodiments of the present disclosure, elements included in the present disclosure are expressed in a singular or plural form according to the embodiments. However, the singular or plural form is appropriately selected for convenience of explanation and the present disclosure is not limited thereto. As such, an element expressed in a plural form may also be configured as a single element, and an element expressed in a singular form may also be configured as plural elements.

Although the figures illustrate different examples of user equipment, various changes may be made to the figures. For example, the user equipment can include any number of each component in any suitable arrangement. In general, the figures do not limit the scope of this disclosure to any particular configuration(s). Moreover, while figures illustrate operational environments in which various user equipment features disclosed in this patent document can be used, these features can be used in any other suitable system.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

## Claims

1. A method of user equipment, UE, the method comprising:
obtaining, from an application function, AF, or a multicast and broadcast service function, MBSF, a service announcement including security information,
identifying whether a security capability of the UE supports a procedure of handling of protected MBS traffic based on the security information; and
receiving, from the base station, MBS traffic via an individual MBS traffic delivery method based on a UE request, in case that the security capability of the UE does not support the procedure.

2. The method of claim 1, further comprising:
receiving, from the base station, the MBS traffic based on the security information, in case that the security capability of the UE supports the procedure based on the security information.

3. The method of claim 1, wherein the security information includes information on the procedure for at least one of a control plane or a user plane.

4. The method of claim 1, wherein the receiving of the MBS traffic comprises:
joining an MBS session by transmitting, a non-access stratum, NAS, message including an indication of requesting the individual MBS traffic delivery method to a session management function, SMF, entity.

5. The method of claim 4, wherein the NAS message includes at least one of a protocol data unit, PDU, session establishment request, a PDU session modification request, security mode complete message or a registration request message.

6. The method of claim 1, wherein the security information includes at least one of a MBS traffic protected at a service layer, the MBS traffic unprotected at the service layer, indications for which security procedures are supported by the network comprising a control-plane procedure or a user-plane procedure, the MBS traffic allowed via 5G Core, 5GC, individual MBS traffic delivery method, the MBS traffic not allowed via 5GC individual MBS traffic delivery method, different levels of protection supported for point-to-multipoint delivery and point-to-point delivery, and the different levels of protection not supported for point-to-multipoint delivery and point-to-point delivery.

7. A user equipment, UE, the UE comprising:
at least one transceiver; and
at least one controller coupled with the at least one transceiver and configured to:
obtain, from an application function, AF, or a multicast and broadcast service function, MBSF, a service announcement including security information,
identify whether a security capability of the UE supports a procedure of handling a protected MBS traffic based on the security information; and
receive, from the base station, MBS traffic via an individual MBS traffic delivery method based on a UE request, in case that the security capability of the UE does not support the procedure.

8. The UE of claim 7, wherein the at least one controller is further configured to:
receive, from the base station, the MBS traffic based on the security information, in case that the security capability of the UE supports the procedure based on the security information.

9. The UE of claim 7, wherein the security information includes information on the procedure for at least one of a control plane or a user plane.

10. The UE of claim 7, wherein the at least one controller is configured to:
join an MBS session by transmitting, a non-access stratum, NAS, message including an indication of requesting the individual MBS traffic delivery method to a session management function, SMF, entity.

11. The UE of claim 10, wherein the NAS message includes at least one of a protocol data unit, PDU, session establishment request, a PDU session modification request, security mode complete message or a registration request message.

12. The UE of claim 7, wherein the security information includes at least one of a MBS traffic protected at a service layer, the MBS traffic unprotected at the service layer, indications for which security procedures are supported by the network comprising a control-plane procedure or a user-plane procedure, the MBS traffic allowed via 5G Core, 5GC, individual MBS traffic delivery method, the MBS traffic not allowed via 5GC individual MBS traffic delivery method, different levels of protection supported for point-to-multipoint delivery and point-to-point delivery, and the different levels of protection not supported for point-to-multipoint delivery and point-to-point delivery.

## Patentansprüche

1. Verfahren eines Benutzergeräts, UE, wobei das Verfahren Folgendes umfasst:
Erhalten einer Dienstankündigung, die Sicherheitsinformationen enthält, von einer Anwendungsfunktion, AF, oder einer Multicast- und Broadcast-Dienstfunktion, MBSF,
Identifizieren, ob eine Sicherheitskapazität des UE ein Verfahren zur Verarbeitung von geschütztem MBS-Datenverkehr basierend auf den Sicherheitsinformationen unterstützt; und
Empfangen von MBS-Datenverkehr über ein individuelles MBS-Datenverkehrsübermittlungsverfahren basierend auf einer UE-Anfrage von der Basisstation, falls die Sicherheitskapazität des UE das Verfahren nicht unterstützt.

2. Verfahren nach Anspruch 1, das ferner Folgendes umfasst:
Empfangen des MBS-Datenverkehrs basierend auf den Sicherheitsinformationen von der Basisstation, falls die Sicherheitskapazität des UE das Verfahren basierend auf den Sicherheitsinformationen unterstützt.

3. Verfahren nach Anspruch 1, wobei die Sicherheitsinformationen Informationen über das Verfahren für eine Steuerungsebene und/oder eine Benutzerebene umfassen.

4. Verfahren nach Anspruch 1, wobei das Empfangen des MBS-Datenverkehrs Folgendes umfasst:
Beitreten einer MBS-Sitzung durch Übertragen einer Non-Access Stratum(NAS)-Nachricht, die eine Anzeige zum Anfordern des individuellen MBS-Datenverkehrsübermittlungsverfahrens enthält, an eine Sitzungsverwaltungsfunktions(SMF)-Entität.

5. Verfahren nach Anspruch 4, wobei die NAS-Nachricht eine Protokolldateneinheits(PDU)-Sitzungsaufbauanforderung, eine PDU-Sitzungsänderungsanforderung, eine Sicherheitsmodus-Abschlussnachricht und/oder eine Registrierungsanforderungsnachricht enthält.

6. Verfahren nach Anspruch 1, wobei die Sicherheitsinformationen einen auf einer Dienstschicht geschützten MBS-Datenverkehr, den auf der Dienstschicht ungeschützten MBS-Datenverkehr, Angaben darüber, welche Sicherheitsverfahren von dem Netzwerk unterstützt werden, einschließlich eines Steuerungsebenenverfahrens oder eines Benutzerebenenverfahrens, den über das individuelle 5G Core(5GC)-MBS-Datenverkehrsübermittlungsverfahren erlaubten MBS-Datenverkehr, den über das individuelle 5GC-MBS-Datenverkehrsübermittlungsverfahren nicht erlaubten MBS-Datenverkehr, verschiedene Schutzstufen, die für Punkt-zu-Mehrpunkt-Übertragung und Punkt-zu-Punkt-Übertragung unterstützt werden, und die verschiedenen Schutzstufen enthalten, die für Punkt-zu-Mehrpunkt-Übertragung und Punkt-zu-Punkt-Übertragung nicht unterstützt werden.

7. Benutzergerät, UE, wobei das UE Folgendes umfasst:
mindestens einen Transceiver; und
mindestens eine Steuerung, die mit dem mindestens einen Transceiver gekoppelt und zu Folgendem konfiguriert ist:
Erhalten einer Dienstankündigung, die Sicherheitsinformationen enthält, von einer Anwendungsfunktion, AF, oder einer Multicast- und Broadcast-Dienstfunktion, MBSF,
Identifizieren, ob eine Sicherheitskapazität des UE ein Verfahren zur Verarbeitung eines geschützten MBS-Datenverkehrs basierend auf den Sicherheitsinformationen unterstützt; und
Empfangen von MBS-Datenverkehr über ein individuelles MBS-Datenverkehrsübermittlungsverfahren basierend auf einer UE-Anfrage von der Basisstation, falls die Sicherheitskapazität des UE das Verfahren nicht unterstützt.

8. UE nach Anspruch 7, wobei die mindestens eine Steuerung ferner zu Folgendem konfiguriert ist:
Empfangen des MBS-Datenverkehrs basierend auf den Sicherheitsinformationen von der Basisstation, falls die Sicherheitskapazität des UE das Verfahren basierend auf den Sicherheitsinformationen unterstützt.

9. UE nach Anspruch 7, wobei die Sicherheitsinformationen Informationen über das Verfahren für eine Steuerungsebene und/oder eine Benutzerebene umfassen.

10. UE nach Anspruch 7, wobei die mindestens eine Steuerung zu Folgendem konfiguriert ist:
Beitreten einer MBS-Sitzung durch Übertragen einer Non-Access Stratum(NAS)-Nachricht, die eine Anzeige zum Anfordern des individuellen MBS-Datenverkehrsübermittlungsverfahrens enthält, an eine Sitzungsverwaltungsfunktions(SMF)-Entität.

11. UE nach Anspruch 10, wobei die NAS-Nachricht eine Protokolldateneinheits(PDU)-Sitzungsaufbauanforderung, eine PDU-Sitzungsänderungsanforderung, eine Sicherheitsmodus-Abschlussnachricht und/oder eine Registrierungsanforderungsnachricht enthält.

12. UE nach Anspruch 7, wobei die Sicherheitsinformationen einen auf einer Dienstschicht geschützten MBS-Datenverkehr, den auf der Dienstschicht ungeschützten MBS-Datenverkehr, Angaben darüber, welche Sicherheitsverfahren von dem Netzwerk unterstützt werden, einschließlich eines Steuerungsebenenverfahrens oder eines Benutzerebenenverfahrens, den über das individuelle 5G Core(5GC)-MBS-Datenverkehrsübermittlungsverfahren erlaubten MBS-Datenverkehr, den über das individuelle 5GC-MBS-Datenverkehrsübermittlungsverfahren nicht erlaubten MBS-Datenverkehr, verschiedene Schutzstufen, die für Punkt-zu-Mehrpunkt-Übertragung und Punkt-zu-Punkt-Übertragung unterstützt werden, und die verschiedenen Schutzstufen enthalten, die für Punkt-zu-Mehrpunkt-Übertragung und Punkt-zu-Punkt-Übertragung nicht unterstützt werden.

## Revendications

1. Procédé d'équipement utilisateur, UE, le procédé comprenant :
obtenir, d'une fonction d'application, AF, ou d'une fonction de service de diffusion et de multidiffusion, MBSF, une annonce de service incluant des informations de sécurité,
identifier si une capacité de sécurité de l'UE prend en charge ou non une procédure de traitement de trafic MBS protégé sur la base des informations de sécurité ; et
recevoir, de la station de base, le trafic MBS via un procédé de distribution individuelle de trafic MBS, à la demande de l'UE, dans le cas où la capacité de sécurité de l'UE ne prend pas en charge la procédure.

2. Procédé selon la revendication 1, comprenant en outre :
recevoir, de la station de base, le trafic MBS sur la base des informations de sécurité, dans le cas où la capacité de sécurité de l'UE prend en charge la procédure sur la base des informations de sécurité.

3. Procédé selon la revendication 1, où les informations de sécurité incluent des informations sur la procédure pour au moins l'un des éléments suivants : un plan de contrôle ou un plan d'utilisateur.

4. Procédé selon la revendication 1, où la réception du trafic MBS comprend :
rejoindre une session MBS en transmettant un message de strate sans accès, NAS, incluant une indication de demande du procédé de distribution individuelle de trafic MBS à une entité de fonction de gestion de session, SMF.

5. Procédé selon la revendication 4, où le message NAS inclut au moins un élément parmi les suivants : une demande d'établissement de session d'unité de données de protocole, PDU, une demande de modification de session PDU, un message de fin de mode de sécurité ou un message de demande d'enregistrement.

6. Procédé selon la revendication 1, où les informations de sécurité incluent au moins un élément parmi les suivants : un trafic MBS protégé au niveau d'une couche de service, le trafic MBS non protégé au niveau de la couche de service, des indications pour lesquelles des procédures de sécurité sont prises en charge par le réseau comprenant une procédure de plan de contrôle ou une procédure de plan d'utilisateur, le trafic MBS autorisé via le procédé de distribution individuelle de trafic MBS 5G Core, 5GC, le trafic MBS non autorisé via le procédé de distribution individuelle de trafic MBS 5GC, différents niveaux de protection pris en charge pour la distribution point à multipoint et la distribution point à point, et les différents niveaux de protection non pris en charge pour la distribution point à multipoint et la distribution point à point.

7. Équipement utilisateur, UE, l'UE comprenant :
au moins un émetteur-récepteur ; et
au moins un contrôleur couplé à l'au moins un émetteur-récepteur et configuré pour :
obtenir, d'une fonction d'application, AF, ou d'une fonction de service de diffusion et de multidiffusion, MBSF, une annonce de service incluant des informations de sécurité,
identifier si une capacité de sécurité de l'UE prend en charge ou non une procédure de traitement du trafic MBS protégé sur la base des informations de sécurité ; et
recevoir, de la station de base, le trafic MBS via un procédé de distribution individuelle de trafic MBS à la demande de l'UE, dans le cas où la capacité de sécurité de l'UE ne prend pas en charge la procédure.

8. UE selon la revendication 7, où l'au moins un contrôleur est en outre configuré pour :
recevoir, de la station de base, le trafic MBS sur la base des informations de sécurité, dans le cas où la capacité de sécurité de l'UE prend en charge la procédure sur la base des informations de sécurité.

9. UE selon la revendication 7, où les informations de sécurité incluent des informations sur la procédure pour au moins l'un des éléments suivants : un plan de contrôle ou un plan d'utilisateur.

10. UE selon la revendication 7, où l'au moins un contrôleur est configuré pour :
rejoindre une session MBS en transmettant un message de strate sans accès, NAS, incluant une indication de demande du procédé de distribution individuelle de trafic MBS à une entité de fonction de gestion de session, SMF.

11. UE selon la revendication 10, où le message NAS inclut au moins un des éléments suivants : une demande d'établissement de session d'unité de données de protocole, PDU, une demande de modification de session PDU, un message de fin de mode de sécurité ou un message de demande d'enregistrement.

12. UE selon la revendication 7, où les informations de sécurité incluent au moins un élément parmi les suivants : un trafic MBS protégé au niveau d'une couche de service, le trafic MBS non protégé au niveau de la couche de service, des indications pour lesquelles des procédures de sécurité sont prises en charge par le réseau comprenant une procédure de plan de contrôle ou une procédure de plan d'utilisateur, le trafic MBS autorisé via le procédé de distribution individuelle de trafic MBS 5G Core, 5GC, le trafic MBS non autorisé via le procédé de distribution individuelle de trafic MBS 5GC, différents niveaux de protection pris en charge pour la distribution point à multipoint et la distribution point à point, et les différents niveaux de protection non pris en charge pour la distribution point à multipoint et la distribution point à point.
